Europäisches Patentamt

European Patent Office

Office européen des brevets

(11) Publication number: 0 588 019 A2

# EUROPEAN PATENT APPLICATION

(21) Application number: 93111573.7

(22) Date of filing: 20.07.93

(51) Int. Cl.5: G02F 1/136, G02F 1/1337, G09G 3/36

(30) Priority: 21.07.92 JP 193734/92
15.12.92 JP 334061/92

(43) Date of publication of application:
23.03.94 Bulletin 94/12

(84) Designated Contracting States:
DE GB

(71) Applicant: MATSUSHITA ELECTRIC
INDUSTRIAL CO., LTD.
1006, Oaza Kadoma
Kadoma-shi, Osaka-fu, 571(JP)

(72) Inventor: Ishihara, Shoichi
1-34-8, Amanogahara-cho
Katano-shi, Osaka-fu 576(JP)
Inventor: Shiiba, Ken
Yunimento Onuka 226,
3-122, Onuka
Kanazawa-shi, Ishikawa-ken 921(JP)
Inventor: Tsukane, Midori
B18-304, 3-15, Korigaoka
Hirakata-shi, Osaka-fu 573(JP)
Inventor: Wakemoto, Hirofumi
30-5-703, Miiminamimachi
Neyagawa-shi, Osaka-fu 572(JP)
Inventor: Satani, Hiroshi
Yamamoto Manshon 302, 5-30, Furukawa-cho
Kadoma-shi, Osaka-fu 571(JP)

(74) Representative: Eisenführ, Speiser & Partner
Martinistrasse 24
D-28195 Bremen (DE)

(54) Active matrix liquid crystal display.

(57) An active-matrix liquid crystal display including a liquid crystal panel (27) in which temperature, tilt angle, driving voltage or storage capacity gradually change from an upper portion of the liquid crystal panel (27) towards a lower portion of the liquid crystal panel (27), in order to improve the uniformity of contrast and brightness.

Fig. 3

## BACKGROUND OF THE INVENTION

1. Field of the Invention

The present invention generally relates to a liquid crystal display element and more particularly, to an active-matrix liquid crystal display in which display material such as liquid crystal is driven by AC by using a switching element such as a thin film transistor (TFT) so as to display images.

2. Description of the Prior Art

Image quality of known active-matrix liquid crystal displays has been greatly improved recently. However, it is still impossible to say regarding flicker, changes of brightness in a vertical direction of a display screen, i.e., brightness inclination, image sticking phenomenon in which immediately after display of a fixed image, the fixed image remains as in a printed state, display performance of gradations, dependence on viewing angle, etc., the known active-matrix liquid crystal displays are not inferior to cathode-ray tubes (CRTs). Especially, improvement of dependence on viewing angle is one of vital problems to be solved in the known liquid crystal displays showing trends towards larger screens.

Generally, image quality of the liquid crystal displays largely depends on viewing angle. That is, image quality changes greatly according to angle for viewing a display screen. Thus, in a liquid crystal display having a large screen, such a phenomenon takes place in which when the display screen is viewed from a viewing point, a displayed image is not uniform at upper and lower portions of the display screen so as to have brightness inclination in a vertical direction of the screen.

Usually, display mode of known active-matrix liquid crystal display elements is twisted nematic (TN) mode in which liquid crystal molecules are aligned so as to be twisted at an angle of 90° between two substrates. At this time, liquid crystal molecules in the vicinity of boundaries of the substrates are aligned at right angles to each other so as to be twisted clockwise or counterclockwise from one substrate to the other substrate.

Such alignment of liquid crystal molecules is obtained by rubbing an alignment layer. A direction of viewing angle, in which maximum contrast can be obtained, (referred to as a "principal viewing angle direction", hereinbelow) is determined by a direction of rubbing. In the known liquid crystal displays, optical design is usually made such that the principal viewing angle direction is oriented towards an upper portion or a lower portion of a liquid crystal panel. Therefore, viewing angle property of the known liquid crystal displays usually exhibits symmetric optical characteristics in a lateral direction of the liquid crystal panel but unsymmetrical optical characteristics in a vertical direction of the liquid crystal panel. Especially, in a normally white mode for performing white display at the time of no application of voltage, nonsymmetry of optical characteristics in the vertical direction of the liquid crystal panel is conspicuous.

In order to correct brightness inclination in the vertical direction of the liquid crystal panel, a method in which amplitude of image signal is changed at upper and lower portions of the display screen is known from, for example, Japanese Patent Laid-Open Publication Nos. 61 -261794 (1986), 61-278892 (1986), 62-43624(1987), 62-178929 (1987), 1-191196 (1989), 3-294822 (1991) and 4-258921 (1992). However, in this known method, processing of the image signal becomes extremely complicated and load on a driver IC for driving liquid crystal is also large.

On the other hand, an attempt is also made in which dependence on viewing angle in the vertical direction of the liquid crystal panel is lessened by structure of the liquid crystal panel. In Japanese Patent Laid-Open Publication No. 3-65926 (1991), Mr. Shunji Suzuki teaches that by changing thickness of a liquid crystal layer at respective display pixels from an upper portion of the liquid crystal panel to a lower portion of the liquid crystal panel, input signal voltage-light transmission characteristics (referred to as "VT characteristics", hereinbelow) at the pixels, namely, dependence of VT characteristics on viewing angle is changed so as to make VT characteristics at the respective pixels approximately equal to each other when viewed from a specific viewing point such that dependence on viewing angle is improved. However, this method lays a heavy burden on a production process of the liquid crystal panel and thus, is not suitable for practical use.

## SUMMARY OF THE INVENTION

In response to progress of technology of liquid crystal display, a liquid crystal panel becomes larger in size. In a liquid crystal panel of a size corresponding to a work station, angle for viewing the liquid crystal panel changes greatly at upper and lower portions of the liquid crystal panel. Thus, such a problem arises that even if an identical image is displayed, contrast and brightness level change markedly at the upper and lower portions of the liquid crystal panel.

The present invention has for its object to improve dependence on viewing angle inherent in conventional active-matrix liquid crystal displays. The present invention is designed to lessen brightness inclination in a vertical direction of a liquid crystal panel due to dependence on viewing angle of a display by a simple method requiring no complicated image signal processing. Meanwhile, the present invention is designed to improve dependence on viewing angle without utilizing a complicated production process.

Concrete arrangements of the present invention are as follows.

The present invention has at least one of the following features (a) to (d).

(a) Temperature of the liquid crystal panel changes gradually from an upper portion of the liquid crystal panel towards a lower portion of the liquid crystal panel.

(b) Tilt angle of liquid crystal molecules changes gradually from the upper portion of the liquid crystal panel towards the lower portion of the liquid crystal panel.

(c) Magnitude of amplitude of driving voltage applied to a liquid crystal layer by a specific driving scheme changes gradually from the upper portion of the liquid crystal panel towards the lower portion of the liquid crystal panel.

(d) Magnitude of storage capacity changes gradually from the upper portion of the liquid crystal panel towards the lower portion of the liquid crystal panel.

In the specific driving scheme, an active-matrix liquid crystal display comprises: a plurality of first lines; a plurality of pixel electrodes which are disposed in a pattern of a matrix and are connected to the first lines through capacitors; an image signal line; a scanning signal line; a switching element which is electrically connected to the image signal line and the scanning signal line and is connected to each of the pixel electrodes; a counter electrode; and liquid crystal which is held between each of the pixel electrodes and the counter electrode and is subjected to AC drive; wherein when during an ON period of the switching element, an image signal voltage obtained by inverting polarity of a signal voltage is supplied to the pixel electrodes per field of a display screen and during an OFF period of the switching element, a first modulation signal having a polarity opposite to that of the image signal voltage is supplied to the first lines per field of the display screen, potential of the pixel electrodes is changed such that a voltage obtained by adding or eliminating a change of the potential of the pixel electrodes and the image signal voltage to each other is applied to the liquid crystal; wherein the first modulation signals supplied to the first lines, respectively are different from one another.

Preferably the specific driving scheme is applied to an active-matrix liquid crystal display in which during the ON period of the switching element (3), the image signal voltage is supplied to the pixel electrodes, wherein the first modulation signal Ve(+) of the positive polarity is supplied to the scanning signal line during the OFF period of the switching element in an odd field and the first modulation signal Ve(-) of the negative polarity is supplied to the scanning signal line during the OFF period of the switching element in an even field so as to change the potential of the pixel electrodes, wherein supposing that a modulation signal amplitude Vepp is defined as Vepp = |Ve(+) - Ve(-)|, a modulation signal amplitude Vepp(n) for an n-th scanning signal line and a modulation signal amplitude Vepp(n+1) for an (n+1)-th scanning signal line have the following relation: Vepp(n) ≦ Vepp(n+1) or Vepp(n) ≧ Vepp(n+1) where character n denotes an arbitrary natural number.

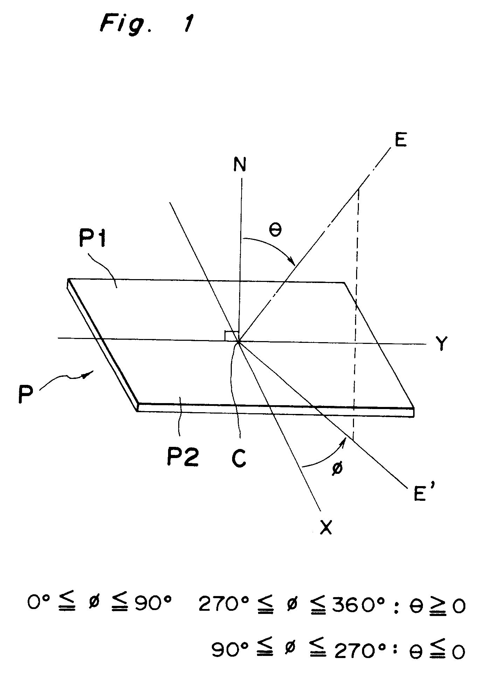

Hereinbelow, a basic principle of improvement of dependence on viewing angle in the present invention is described. Such a phenomenon that contrast or brightness level at the upper portion of the liquid crystal panel is quite different from that at the lower portion of the liquid crystal panel even if an identical image is displayed takes place because angle for viewing the liquid crystal panel at the upper portion of the liquid crystal panel is different from that at the lower portion of the liquid crystal panel. Fig. 1 shows a liquid crystal panel P having an upper portion P1 and a lower portion P2. The liquid crystal panel P has a width of 250 mm from the upper portion P1 to the lower portion P2. A normal N relative to a display screen of the liquid crystal panel P is passes through a center C of the liquid crystal panel P. In a liquid crystal display in which liquid crystal molecules are aligned such that principal viewing angle direction is oriented towards the upper portion P1 of the liquid crystal panel P, when the display screen is viewed on the normal N at a distance of 300 mm from the display screen, the upper portion P1 of the liquid crystal panel P is viewed at angles $\theta$ of 22.6° and $\phi$ of 0°, while the lower portion P2 of the liquid crystal panel P is viewed at angles $\theta$ of -22.6° and $\phi$ of 180°. In Fig. 1, viewing angles ($\theta$, $\phi$) are defined as shown. Namely, the display screen is viewed along a line E forming an angle $\theta$ with the normal N. The line E is projected onto the display screen as a line E'. When X-Y coordinates are established on the display screen as shown in Fig. 1, the line E' forms an angle $\phi$ with the X-axis. When the display screen is viewed from the lower portion P2 of the liquid crystal panel P as shown in Fig. 1, the angle $\theta$ is set positively. On the contrary, when the display screen is viewed from the upper portion P1 of the liquid crystal panel P, the angle $\theta$ is set negatively.

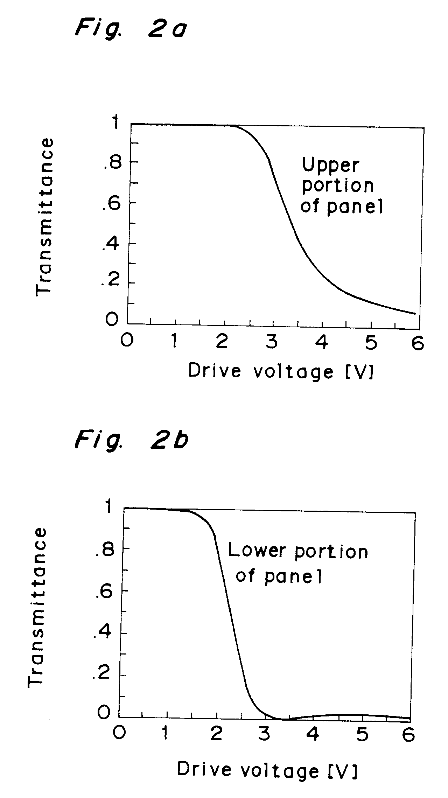

More specifically, the phenomenon that contrast or brightness level at the upper portion of the liquid crystal panel is different from that at the lower portion of the liquid crystal panel is caused by the fact that dependence of VT characteristics on viewing angle at the upper portion of the liquid crystal panel is different from that at the lower portion of the liquid crystal panel. Figs. 2a and 2b illustrate typical dependence of VT characteristics on viewing angle in a liquid crystal display element in which liquid crystal molecules are aligned such that principal viewing angle direction is oriented towards the upper portion of the liquid crystal panel. When the liquid crystal panel is viewed on the normal at a distance of 300 mm from the liquid crystal panel, the upper portion of the liquid crystal panel has VT characteristics shown in Fig. 2a, while the lower portion of the liquid crystal panel has VT characteristics shown in Fig. 2b.

VT characteristics in an identical liquid crystal material depend on temperature of the liquid crystal panel, gap of the liquid crystal panel, tilt angle of liquid crystal molecules at a boundary surface of an alignment layer, twisting angle of the liquid crystal molecules, sticking angle of a polarizer and magnitude of storage capacity. Therefore, if a liquid crystal panel can be produced in which these conditions change from an upper portion of the liquid crystal panel towards a lower portion of the liquid crystal panel, dependence of optical characteristics on viewing angle can be improved. However, among the above conditions, it is difficult from a standpoint of processing and therefore, impractical to continuously change gap of the liquid crystal panel, twisting angle of the liquid crystal molecules and sticking angle of the polarizer

On the other hand, in a sense that profile of VT characteristics is changed, driving scheme may also be employed to the end in the same manner as the above mentioned material design and optical design. Namely, also when VT characteristics are shifted to a high-voltage side or a low-voltage side, similar satisfactory effects can be gained.

In case the switching element is a TFT, potential change $Cgd \cdot Vg/\Sigma C$ ($\Sigma C$ = overall electrostatic capacity per pixel) relative to the image signal is induced in a negative direction through a capacity $Cgd$ between a gate and a drain by potential change $Vg$ of a scanning signal. Thus, when the unsymmetrical positive and negative first modulation signals $Ve(+)$ and $Ve(-)$ in which polarity is inverted per field are applied to the first lines through the storage capacity $Cs$, potential changes $Cs \cdot Ve(+)/\Sigma C$ and $Cs \cdot Ve(-)/\Sigma C$ are generated in the pixel electrodes in the negative and positive directions, respectively and are added to the above mentioned potential change $Cgd \cdot Vg/\Sigma C$. If these potential changes are set so as to satisfy the following equation (A), dielectric anisotropy of liquid crystal and DC component induced through the capacity between the gate and the drain by the scanning signal are at least partially compensated for so as to eliminate causes of flicker, image sticking, etc., thereby resulting in high-quality display and rise of reliability of the display.

$$Cs \cdot Ve(+)/\Sigma C + Cgd \cdot Vg/\Sigma C = Cs \cdot Ve(-)/\Sigma C - Cgd \cdot Vg/\Sigma C = \triangle V^* \qquad (A)$$

Supposing now that $Cs$, $Cgd$, $\Sigma C$ and $Vg$ have fixed values, $Ve(+)$ and $Ve(-)$ are not determined uniquely but satisfy the following relations (B) and (C).

$$(Ve(-) - Ve(+))/2 = Cgd \cdot Vg/Cs = Constant \qquad (B)$$

$$(Ve(+) - Ve(-)) = 2(\Sigma C/Cs)\triangle V^* = Vepp \qquad (C)$$

When $Ve(+)$ and $Ve(-)$ are changed so as to satisfy the above equations (B) and (C), namely, $\triangle V^*$ or Vepp is changed so as to satisfy the equations (B) and (C), VT characteristics of the display can be changed. Changing of $\triangle V^*$ is equivalent to changing of Vepp.

Generally, in liquid crystal displays, VT characteristics change markedly according to angle for viewing the liquid crystal displays, especially, vertical angle for viewing the liquid crystal displays. When this change of VT characteristics according to viewing angle and change of VT characteristics due to shift of set $\triangle V^*$ or Vepp are caused to eliminate each other, it becomes possible at a viewing point to uniform intensity of transmitted light over the whole screen.

In the present invention, since VT characteristics are changed gradually from the upper portion of the liquid crystal panel towards the lower portion of the liquid crystal panel, change of contrast or brightness due to difference of viewing angles for viewing the upper and lower portions of the liquid crystal panel can be lessened greatly.

Also in case the driving scheme is employed in which $Ve(+)$, $Ve(-)$ or $\triangle V^*$ is given as a voltage value independent of each scanning signal line, DC electric field is not generated among potentials of the pixel electrode, the signal electrode and the counter electrode, so that DC voltage is not applied to liquid crystal

4

and thus, causes of flicker, image sticking, etc. can be eliminated, thereby resulting in higher operational reliability.

BRIEF DESCRIPTION OF THE DRAWINGS

This object and features of the present invention will become apparent from the following description taken in conjunction with the preferred embodiments thereof with reference to the accompanying drawings, in which:

Fig. 1 is a view explanatory of viewing angles $(\theta, \phi)$ (already referred to);

Figs. 2a and 2b are graphs explanatory of dependence of VT characteristics on viewing angle (already referred to);

Fig. 3 is a schematic view of a liquid crystal display according to a first embodiment of the present invention;

Fig. 4 is a graph showing VT characteristics of the liquid crystal display of Fig. 3;

Fig. 5 is a schematic view showing an arrangement of a liquid crystal panel employed in a liquid crystal display according to a second embodiment of the present invention;

Fig. 6 is a circuit diagram explanatory of a principle of a liquid crystal display according to a third embodiment of the present invention;

Figs. 7a to 7f are views showing voltage wave forms of the liquid crystal display of Fig. 6;

Fig. 8 is a graph showing VT characteristics and effects of voltage in the liquid crystal display of Fig. 6;

Fig. 9 is a graph showing dependence of VT characteristics on viewing angle in the liquid crystal display of Fig. 6 driven by a known driving schema in which $\triangle V^*$ of an identical value is given to all scanning lines;

Fig. 10 is a graph showing VT characteristics in which optimum Vt(+) and Vt(-) are set for various viewing angles in the liquid crystal display of Fig. 6;

Fig. 11 is a circuit diagram showing a basic structure of the liquid crystal display of Fig. 6;

Fig. 12 is a view showing voltage wave forms of signal lines in the liquid crystal display of Fig. 6;

Fig. 13 is a circuit diagram explanatory of a principle of a liquid crystal display according to a fourth embodiment of the present invention;

Figs. 14a and 14b are views showing voltage wave forms of the liquid crystal display of Fig. 13;

Fig. 15 is a circuit diagram showing a basic structure of the liquid crystal panel of Fig. 13;

Fig. 16 is a graph showing optimum Vepp for respective scanning signal lines in the liquid crystal panel of Fig. 13; and

Fig. 17 is a view showing layout of elements in an array substrate of a liquid crystal panel employed in a liquid crystal display according to a fifth embodiment of the present invention.

Before the description of the present invention proceeds, it is to be noted that like parts are designated by like reference numerals throughout several views of the accompanying drawings.

DESCRIPTION OF THE PREFERRED EMBODIMENTS

When optical characteristics of a liquid crystal panel for different angles for viewing the liquid crystal panel are evaluated, a large liquid crystal panel having a display area of 250 mm x 320 mm is employed and VT characteristics obtained at the time when an upper portion of the liquid crystal panel is viewed at an angle $\theta$ (Fig. 1) of 22.6° are compared with VT characteristics obtained at the time when a lower portion of the liquid crystal panel is viewed at an angle $\theta$ of -22.6°.

Since effects of first and second embodiments of the present invention are not associated with active-matrix drive essentially, experiments in the first and second embodiments of the present invention are performed by using simple cells from a standpoint of their convenience.

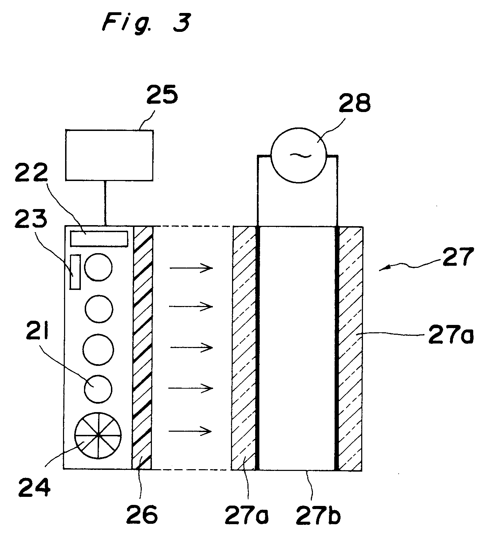

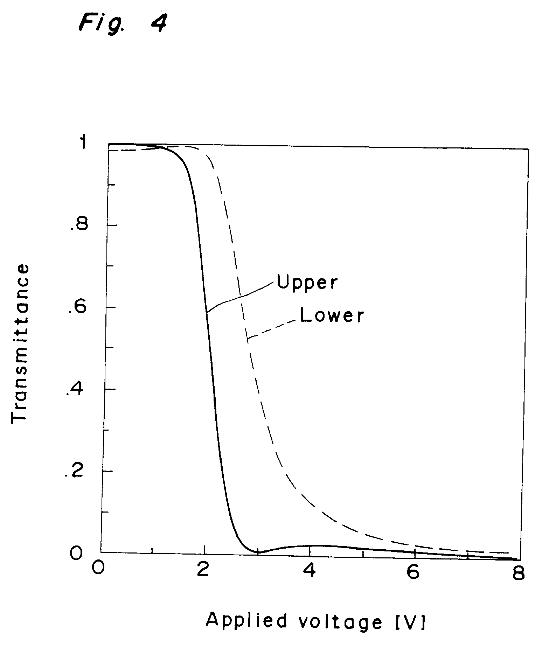

A liquid crystal display according to the first embodiment of the present invention is described with reference to Figs. 3 and 4, hereinbelow. Initially, ITO (indium-tin-oxide) electrodes are provided on opposed surfaces of two glass substrates 27a each having an effective display area of 250 mm x 320 mm and 4.0 wt. % NMP solution of polyimide "PSI-2201" (brand name of Chisso Corporation of Japan) is coated on the opposed surfaces of the substrates 27a in spinning method so as to be cured into alignment layers at 200 °C for one hour. Subsequently, the alignment layers are subjected to rubbing at a twist angle of 90° such that a principal viewing angle direction is oriented towards an upper portion of a liquid crystal panel. Thereafter, the substrates 27a are bonded to each other through glass fibers of 4.0 $\mu$m in diameter and then, liquid crystal "ZLI-1565" (brand name of E. Merck of Germany) is filled, as a liquid crystal layer 27b, in between the substrates 27a. Thus, a liquid crystal panel 27 is obtained.

As shown in Fig. 3, the liquid crystal display includes a backlight 21, an inverter 22, a transformer 23, a fan 24, a power source 25 for the backlight 21, a diffuser 26, the liquid crystal panel 27 and a driving circuit 28. The backlight 21, the inverter 22, the transformer 23, the fan 24, etc. are disposed so as to assemble a module such that upper and lower portion of the liquid crystal panel have temperatures of 60 °C and 20 °C, respectively. Subsequently, VT characteristics obtained at the time when the upper portion or the lower portion of the liquid crystal panel 27 is viewed on a normal passing through a center of the liquid crystal panel 27 and at a distance of 300 mm from the liquid crystal panel 27 are evaluated.

Fig. 4 shows results of measurements of the VT characteristics. At this time, measurement of contrast, i.e. ratio of brightness at the time of application of a voltage of 6V to brightness at the time of no application of the voltage has revealed that the upper and lower portions of the liquid crystal panel 27 have contrasts of 33 and 62, respectively.

On the other hand, when a module was designed as a comparative example in which a liquid crystal panel as a whole has a temperature of 20 °C, measurement of the contrast showed that upper and lower portions of the liquid crystal panel have contrasts of 12 and 60, respectively.

As will be apparent from the foregoing, in the liquid crystal panel in which the principal viewing angle direction is oriented towards the upper portion of the liquid crystal panel, when the module is designed such that the upper portion of the liquid crystal panel is set to a temperature higher than that of the lower portion of the liquid crystal panel, range of the viewing angle can be widened further.

In the present invention, predetermined temperature distribution is provided in the display screen of the liquid crystal panel, which is quite advantageous in also production process over a prior art liquid crystal panel in which temperature distribution in the display screen is made as uniform as possible.

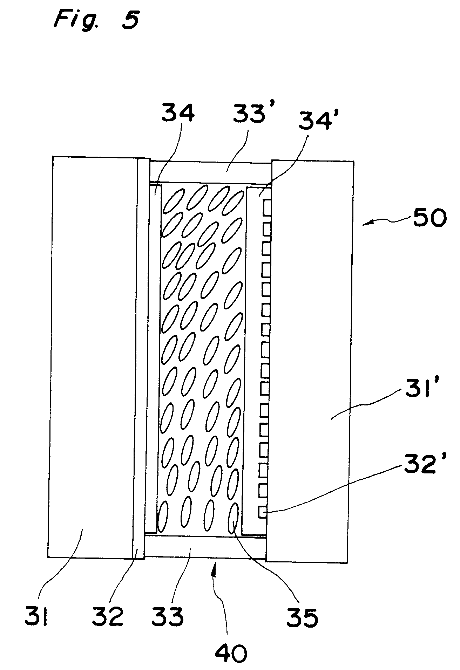

Fig. 5 shows a liquid crystal panel 50 employed in a liquid crystal display according to a second embodiment of the present invention. Initially, ITO electrodes 32 and 32' are, respectively, provided on opposed surfaces of two glass substrates 31 and 31' each having an effective display area of 250 mm x 320 mm and polyimide solution "RN-753" (brand name of Nissan Chemical Industries, Ltd. of Japan) is coated on the opposed surfaces of the substrates 31 and 31' in spinning method so as to have a dried thickness of 600 Å as alignment layers 34 and 34', respectively. At this time, by controlling surface temperature of the hot stage, the polyimide solution for the alignment layers 34 and 34' is cured for one hour such that upper and lower portions of the substrates 31 and 31' have temperatures of 200 °C and 170 °C, respectively. Subsequently, the alignment layers 34 and 34' are subjected to rubbing at a twist angle of 90° such that a principal viewing angle direction is oriented towards an upper portion of the liquid crystal panel 50. Thereafter, the substrates 31 and 31' are bonded to each other through glass fibers of 4.5 μm in diameter by using sealing resin 33 and sealing resin 33' and then, liquid crystal "LIXON-5047" (brand name of Chisso Corporation) is filled, as a liquid crystal layer 40, in between the substrates 31 and 31'. As schematically shown in Fig. 5, liquid crystal molecules 35 of the liquid crystal layer 40 are aligned as shown schematically in Fig. 5 and thus, tilt angle of the liquid crystal molecules 35 is reduced from an upper portion of the liquid crystal panel 50 to a lower portion of the liquid crystal panel 50. Meanwhile, the glass fibers are not illustrated in Fig. 5. Thus, the liquid crystal panel 50 is obtained.

Then, in the same manner as in the first embodiment, contrast is measured when the upper and lower portions of the liquid crystal panel 50 are viewed on a normal passing through a center of the liquid crystal panel 50 and at a distance of 300 mm from the liquid crystal panel 50. Table 1 below shows results of the measurement.

Table 1

| | Contrast | |
|---|---|---|
| | Present invention | Comp. example |
| Upper panel portion | 30 | 16 |
| Lower panel portion | 50 | 50 |

As a comparative example, the alignment layers provided on the substrates are wholly cured at 170 °C such that the liquid crystal panel is obtained and then, contrast is measured as shown in Table 1 above.

Another experiment for measuring tilt angle has revealed that the alignment layers 34 and 34' of the present invention give tilt angles of 4.8° and 3.3° when cured at 200 °C for one hour and at 170 °C for one hour, respectively. In the second embodiment, it is apparently effective that tilt angle of the liquid crystal molecules 35 is reduced from the upper portion of the liquid crystal panel 50 to the lower portion of the liquid crystal panel 50.

The present invention achieves such remarkable effects for practical use that dependence on viewing angle in the vertical direction of the liquid crystal panel 50 can be lessened greatly and viewing angle can be widened.

Meanwhile, a homogeneous cell provided with ITO electrodes and a liquid crystal layer having a thickness of 20 $\mu$m is employed for measuring tilt angle of the liquid crystal molecules 35 and tilt angle of the liquid crystal molecules 35 is measured at 25 °C by crystal rotation method in a shortcircuiting state between the ITO electrodes.

Hereinbelow, third to five embodiments of the present invention directed to active-matrix liquid crystal displays are described. Concrete array structure and production method of the active-matrix liquid crystal displays have already been reported by, for example, E. Takeda et al. in IDRC (International Display Research Conference) '88, p156 (1988) and Proceedings of SID, p87 (1990).

In the third embodiment, polyimide solution "LX-5400" (brand name of Hitachi Chemical Co., Ltd. of Japan) is coated by spinning method on an array substrate and a color filter substrate having an effective display area of 250 mm x 320 mm so as to have a dried thickness of 600 Å as alignment layers. In the array substrate, 1036800 trio-pixels are provided on a glass substrate and each dot has a TFT element. Meanwhile, the color filter substrate has red, green and blue filters for the pixels, respectively. At this time, the polyimide solution is cured at 170 °C.

Subsequently, the alignment layers are subjected to rubbing at a twist angle of 90° such that a principal viewing angle direction is oriented towards an upper portion of a liquid crystal panel. Thereafter, these substrates are bonded to each other through glass fibers of 4.0 $\mu$m in diameter. Then, liquid crystal "ZLI-1565" (brand name of E. Merck) is filled, as a liquid crystal layer, in between the substrates. Thus, the liquid crystal panel is obtained.

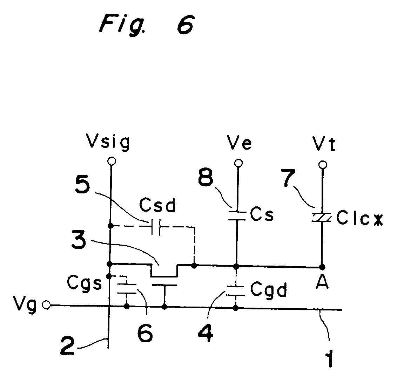

Fig. 6 shows an equivalent circuit of display elements of the TFT active-matrix liquid crystal display of the present invention. Each display element has a TFT 3 at a junction of a scanning signal line 1 and an image signal line 2. As parasitic capacitors, the TFT 3 has gate-drain capacitor 4 having a capacity Cgd, a source-drain capacitor 5 having a capacity Csd and a gate-source capacitor 6 having a capacity Cgs. In addition, a liquid crystal capacitor 7 having a capacity Clc* and a storage capacitor 8 having a capacity Cs are formulated intentionally.

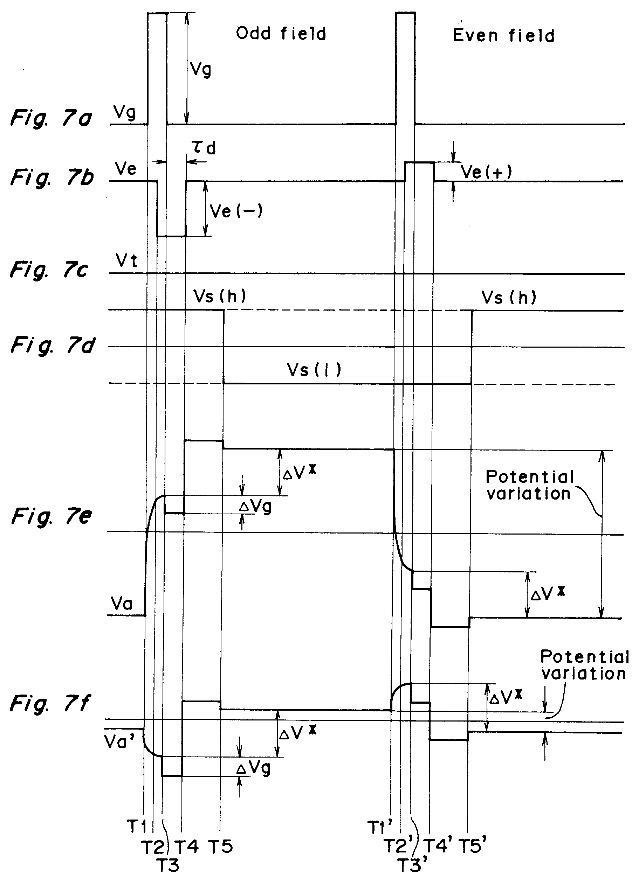

As external driving voltages applied to the electrodes of the elements, a scanning signal Vg is supplied to the scanning signal line 1, an image signal voltage Vsig is supplied to the image signal line 2 and a first modulation signal Ve(+) or Ve(-) is supplied to one of electrodes of the storage capacitor 8 in accordance with polarity of the image signal inverted at an interval of one field. Meanwhile, a predetermined voltage is applied to a counter electrode of the liquid crystal capacitor 7 per field. In Fig. 6, through the parasitic capacitors and the capacitors formulated intentionally, influence of the driving voltages appears at a pixel electrode disposed at a point A. When the signals Vg, Ve(+), Ve(-), Vt and Vsig which are defined as variable components of voltages associated with an n-th scanning line as shown in Figs. 7(a) to 7(d) are applied to the points in Fig. 6, respectively, potential changes $\triangle V^*+$ and $\triangle V^*$- of the pixel electrode in even and odd fields through capacitive coupling are expressed by the following equations (1) and (2), respectively.

$$\triangle V^*+ \ = \ (Cs \cdot Ve(+) \ + \ Cgd \cdot Vg \ - \ Csd \cdot Vsig)/Ct \qquad (1)$$

$$\triangle V^*- \ = \ (Cs \cdot Ve(-) \ - \ Cgd \cdot Vg \ - \ Csd \cdot Vsig)/Ct \qquad (2)$$

$$Ct \ = \ Cs \ + \ Cgd \ + \ Csd \ + \ Clc^*$$

The above equations (1) and (2) exclude potential variable component at the point A based on the conduction through the image signal line on turning on of the TFT. In the equations (1) and (2), the first term represents potential change caused by the first modulation signal, the second term represents potential change which is induced at the pixel electrode through the parasitic capacity Cgd of the TFT by the scanning signal Vg and the third term represents potential change which is induced at the pixel electrode through the parasitic capacity by the image signal voltage. The capacity Clc* is a capacity of liquid crystal, which changes under the influence of dielectric anisotropy in response to changes of alignment state of liquid crystal molecules due to magnitude of the signal voltage Vsig. Thus, Clc* and $\triangle V^*$ correspond to a large capacity Clc(h) and a small capacity Clc(l) of liquid crystal, respectively. At this time, the capacity Cgs between the gate and the signal electrode is neglected not only because both the scanning signal line and the image signal line are driven by the low-impedance power source but because coupling between the scanning signal line and the image signal line does not directly effect potential of the display electrode. If the potential changes $\triangle V^*+$ and $\triangle V^*-$ in the even and odd fields become equal to each other, DC voltage is not applied to liquid crystal and thus, symmetric AC drive can be performed. In this case, the following equation (3) is satisfied.

$$|Cs \cdot Ve(+) + Cgd \cdot Vg - Csd \cdot Vsig| =$$
$$|Cs \cdot Ve(-) - Cgd \cdot Vg - Csd \cdot Vsig| \qquad (3)$$

Since Vsig gives an inverted signal to each field, the third terms $Csd \cdot Vsig$ of the both sides in the equation (3) eliminate their effects to each other for the both field. Hence, the equation (3) can be simplified as follows.

$$(Cs \cdot Ve(+) + Cgd \cdot Vg) = (Cs \cdot Ve(-) - Cgd \cdot Vg) = \triangle V^* \qquad (4)$$

This equation (4) is changed to the following equation (5).

$$(Ve(-) - Ve(+)) = 2Cgd \cdot Vg/Cs = Vepp \qquad (5)$$

The first point to be noted is that the positive and negative potentials $\triangle V^*$ induced at the pixel electrode for the even and off fields can be made equal to each other relative to the counter electrode regardless of the capacity of liquid crystal. Therefore, an identical voltage of positive and negative polarities is applied to liquid crystal and thus, flicker is substantially reduced.

The second point to be noted is that $Clc^*$ does not appear in the equations (3) and (4). Namely, if liquid crystal is driven under the conditions satisfying the equations (3) and (4), effects of dielectric anisotropy of liquid crystal disappear and DC voltage resulting from $Clc^*$ is not generated in the display.

Meanwhile, the third point to be noted is that under the driving conditions satisfying the equations (3) and (4), the scanning signal Vg is capable of eliminating to zero, the DC potential induced between the image signal line and the display electrode through the parasitic capacity Cgd. Meanwhile, in the driving scheme of the present invention, since signals of positive and negative polarities for the both fields are applied to potential of the counter electrode, DC electric field is not generated among potentials of the pixel electrode, the signal electrode and the counter electrode. Thus, the driving scheme of the present invention does not apply DC voltage to liquid crystal, thereby resulting in higher operational reliability.

The fourth point to be noted is that the conditional equations (3) and (4) include the two voltage parameters Ve(+) and Ve(-) which can be arbitrarily set at display. Therefore, if the parameters Ve(+) and Ve(-) are controlled in accordance with the equations (3) and (4), the potential change $\triangle V^*$ appearing at the pixel electrode can be set to an arbitrary value. By changing this $\triangle V^*$, VT characteristics of the display can be changed and thus, the object of the present invention, i.e., improvement of dependence on viewing angle can be achieved. Meanwhile, when $\triangle V^*$ is not less than a threshold voltage of liquid crystal, Vsig can be reduced, thus resulting in saving of electric power. On the other hand, Vg is a semi-fixed constant determined by the driving conditions but effects of Vg can be corrected by Ve(+) and Ve(-). Meanwhile, Vsig is display data itself and varies between a maximum and a minimum arbitrarily.

Figs. 7e and 7f depict voltage changes at the pixel electrode of the point A in Fig. 6 when the driving signals Vg and Vsig and the modulation signal Ve have been applied to the electrodes of the display elements of Fig. 6. For example, in case the scanning signal Vg is inputted at T = T1 when Vsig stands at Vs(h) in the odd field as shown by the solid line of Fig. 7d, the TFT is conducted so as to charge the point A until the potential Va of the point A becomes identical with the potential Vs(h). Before the TFT is turned off at T = T2, desirably, between T1 and T2 during which the TFT is in conductive state, the signal Ve(-) is imparted to Ve in the negative direction. Subsequently, when the scanning signal disappears, this change of Vg appears as potential variations at the point A through Cgd. Furthermore, when Ve has changed by Ve(-) in the negative direction at T = T4 through a lag time $\tau$d, this influence appears as displacement of the potential Va in the positive direction as shown. Subsequently, when Vsig has changed from Vs(h) to Vs(1) at T = T5, potential variation at the point A appears similarly. In Figs. 7e and 7f, this capacitive coupling component is included in $\triangle V^*$.

Thereafter, when the scanning signal has been inputted in the even field, the TFT charges the point A to the low level Vs(1) of Vsig. When the TFT has been turned off, the capacitive coupling potential $\triangle V^*$ appears in the same manner as described above. In case Vsig is at high level and Ve is at low level or to the contrary, Vsig is at low level and Ve is at high level when the TFT is turned off as described above, effective applied voltage amplitude Veff for liquid crystal is substantially equal to $(2\triangle V^* + Vsigpp)$ relative

to image signal amplitude Vsigpp as shown in the case where Ve varies after the TFT has been turned off. As a result, Ve and Vsig overlap each other. In other words, output amplitude of image signal output IC can be reduced by 2△V*. The above mentioned phase relation between Ve and Vsig is referred to as "opposite phase". On the other hand, phase relation which Vsig has for the modulation signal Ve as shown by dotted line in Fig. 7d is referred to as "in-phase". Effective applied voltage amplitude at the point A is substantially equal to (2△V* - Vsigpp), so that △V* and Vsig partially eliminate each other.

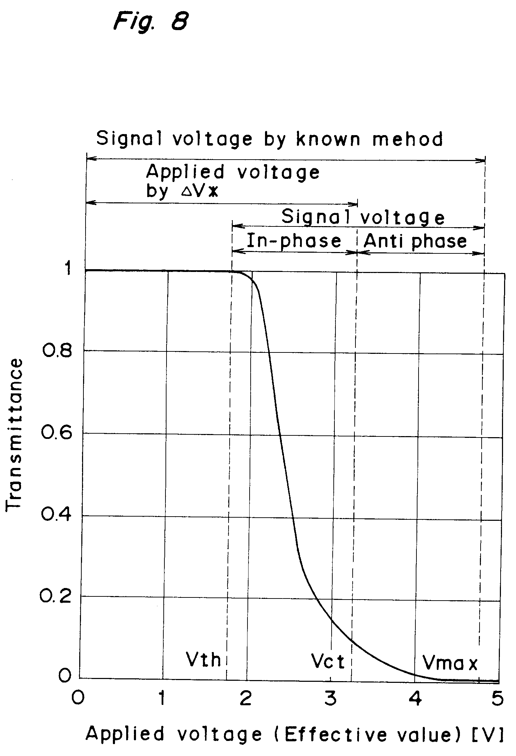

Fig. 8 show VT characteristics of liquid crystal and an example of voltage range for controlling transmitted light by △V* and Vsig. The voltage range for changing transmitted light of liquid crystal is from a threshold voltage Vth to a saturation voltage Vmax in liquid crystal. When △V* is so set as to be not less than Vth, a necessary maximum signal voltage is (Vmax - Vth) if phase control is not performed. If amplitude and phase of signal voltage are controlled with setting the applied voltage based on △V* to Vct, the necessary maximum signal voltage can be reduced to about {(Vmax - Vth)/2}.

In this embodiment, a case is given in which a liquid crystal display having a height of about 25 cm is viewed orthogonally at a distance of 40 cm from a center of the liquid crystal display. At this time, when upper and lower ends of the display are viewed, an angle of about 17° is formed vertically for each of the upper and lower ends of the display.

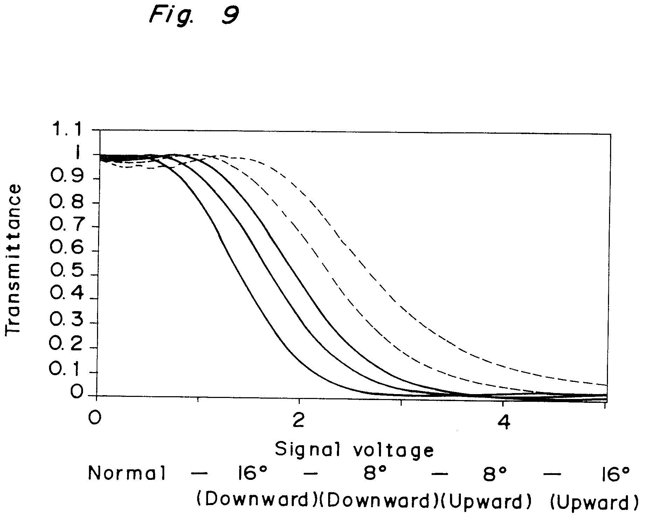

Fig. 9 shows relation between input signal voltage and transmittance characteristics through change of viewing angle. In case △V* of an identical value is given to all the scanning lines, VT characteristics change greatly according to viewing angle.

In the liquid crystal display of this embodiment, principal viewing angle direction is set towards the upper portion of the liquid crystal panel. Thus, when the display screen is viewed from above, VT characteristics shift to low-voltage side of input voltage. On the contrary, when the display screen is viewed from below, VT characteristics shift to high-voltage side of input voltage.

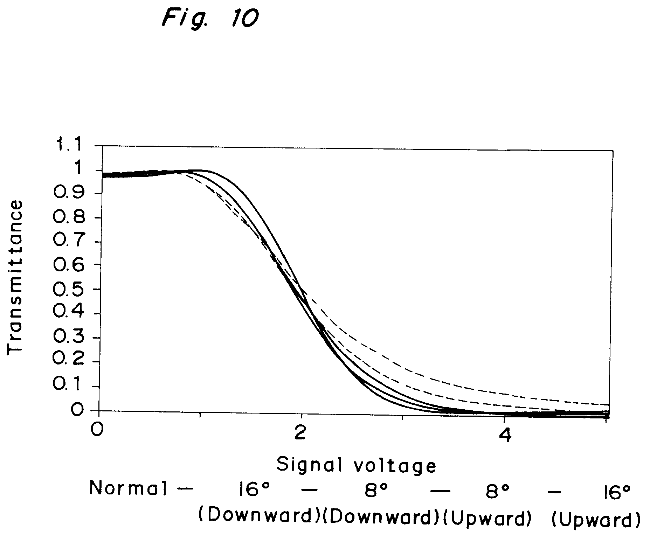

Thus, when △V* which gives, in viewing angles corresponding to the respective scanning lines, VT characteristics most approximate to those of a viewing point orthogonal to the liquid crystal display is given to each scanning line, VT characteristics at the respective viewing angles come close to each other as shown in Fig. 10. As a result, transmitted light intensity of the whole display screen becomes uniform at a viewing point orthogonal to the liquid crystal display and thus, the object of the present invention, i.e., improvement of dependence on viewing angle can be achieved. Namely, by utilizing such a property that VT characteristics shift to high-voltage and low-voltage sides of input voltage when △V* is reduced and increased, respectively, △V* which gives, in viewing angles corresponding to the respective scanning lines from a viewing point, VT characteristics most approximated to those at the center of the display screen is given to each scanning line. In this embodiment, △V* is gradually reduced as a point on the display screen is displaced downwardly. At this time, difference between V* at the upper portion of the screen and △V* at the lower portion of the screen is about 1.5 V.

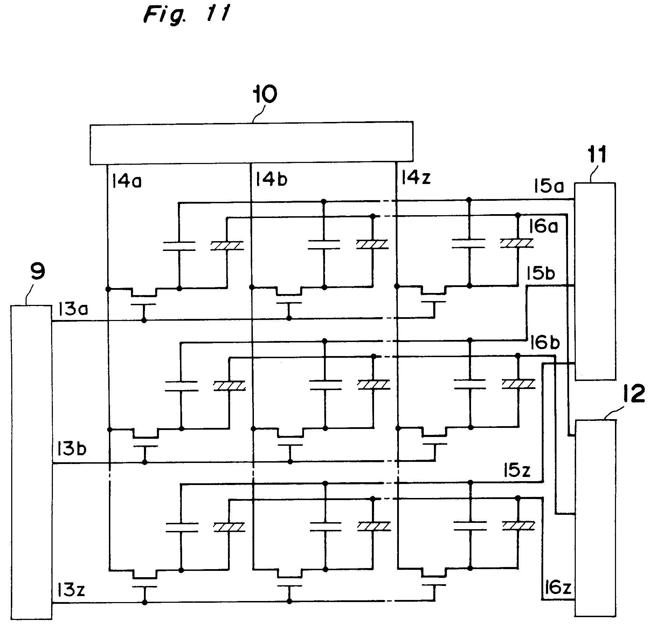

Fig. 11 shows a circuit of the liquid crystal display according to the third embodiment of the present invention. The circuit includes a scanning driving circuit 9, an image signal driving circuit 10, a first modulation circuit 11, a second modulation circuit 12, scanning signal lines 13a to 13z, image signal lines 14a to 14z, common electrodes 15a to 15z each having a storage capacity Cs and counter electrodes 16a to 16z of liquid crystal. In this embodiment, since the storage capacity and the counter electrode are separately formed on each scanning signal line as described above, the first modulation signal is also applied to each corresponding scanning signal line.

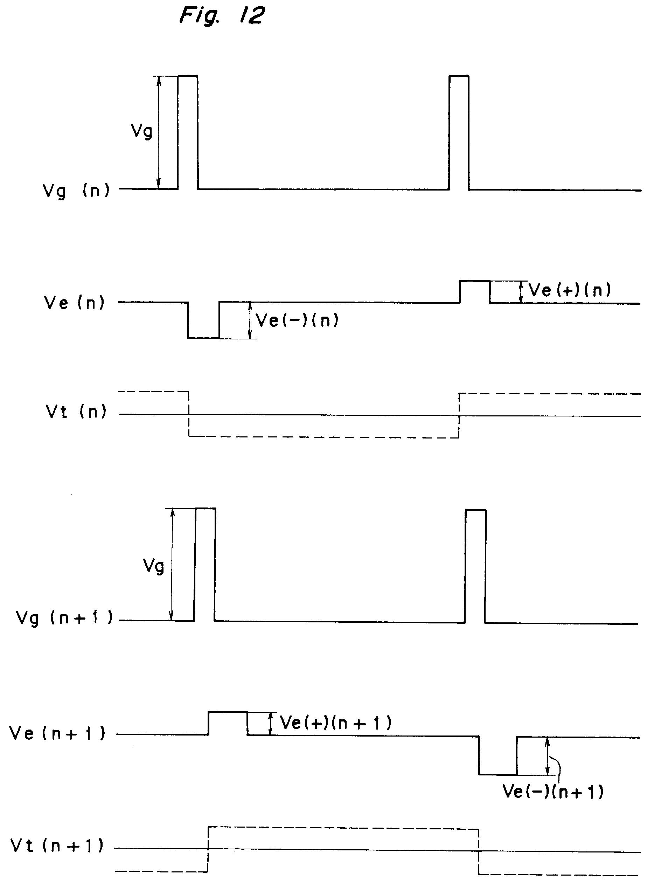

Fig. 12 is a timing chart of the scanning signal and the modulation signal and depicts the scanning signal and the modulation signal for the n-th and (n + 1)-th scanning signal lines. Relations of the modulation signal and the image signal versus △V* and Vsig are substantially equal to those of Figs. 7a to 7f. Namely, polarities of the image signal and the modulation signal are inverted per field. In Fig. 12, different value are imparted to △V* , i.e. Vepp for the n-th scanning signal line and that for the (n + 1)-th scanning signal line. This active-matrix liquid crystal display can be driven with less flicker in the whole range from white to black by setting output amplitude of the signal voltage to 3Vpp and is capable of performing display having excellent contrast. Furthermore, DC component between the electrodes scarcely exists and reliability of liquid crystal is excellent for a long time. Hereinbelow, other embodiments are described in which wide viewing angle is achieved by driving scheme.

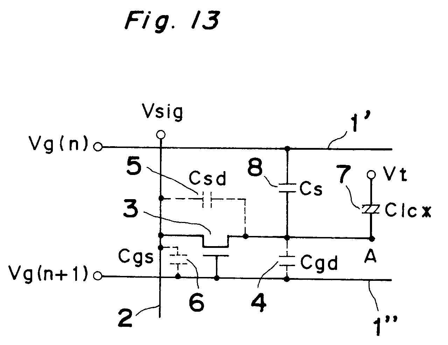

Except for that an array substrate in which the first signal line acts also as the scanning signal line is employed, an active-matrix liquid crystal display according to the fourth embodiment of the present invention is the same as that of the third embodiment. Fig. 13 shows an equivalent circuit of display elements of the TFT active-matrix liquid crystal display of the present invention. The electric circuit includes an n-th scanning signal line 1', an (n + 1)-th scanning signal line, an image signal line 2 and a TFT 3. As parasitic capacities, the TFT 3 includes a gate-drain capacitor 4 having a capacity Cgd, a source-drain capacitor 5 having a capacity Csd and a gate-source capacitor 6 having a capacity Cgs. Furthermore, a liquid crystal capacitor 7 having a capacity Clc* and a storage capacitor 8 having a capacity Cs are formulated intentionally.

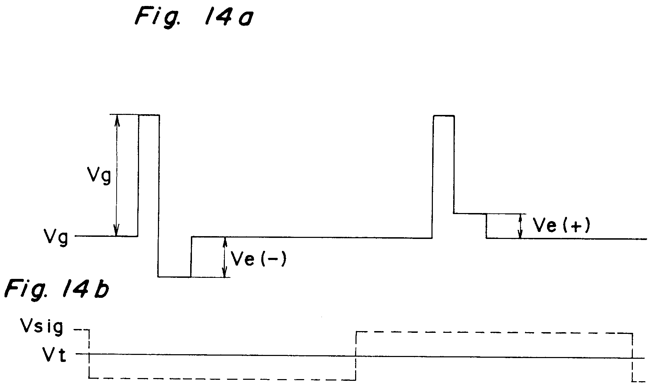

As external driving voltages applied to the electrodes of the elements, a scanning signal Vg(n) is supplied to the n-th scanning signal line 1', a scanning signal Vg(n + 1) is supplied to the (n + 1)-th scanning signal line 1" and the image signal voltage Vsig is supplied to the image signal line 2. Meanwhile, a predetermined voltage is applied to a counter electrode of the liquid crystal capacitor 7. Influence of the driving voltages appears at a pixel electrode disposed at a point A through the parasitic capacitors and the capacitors formulated intentionally. When the signals Vg, Ve( + ), Ve(-), Vt and Vsig which are defined as variable components of voltages associated with an n-th scanning line as shown in Figs. 14a and 14b are applied to the points in Fig. 13, respectively, potential changes $\triangle V^{*}+$ and $\triangle V^{*}-$ of the pixel electrode in even and odd fields through capacitive coupling are, respectively, expressed by the equations (1) and (2) referred to earlier. Potential variable component at the point A based on the conduction through the image signal line on turning on of the TFT is excluded from the equations (1) and (2). Therefore, in the same manner as in the third embodiment, viewing angle can be widened by changing $\triangle V^{*}$ for each scanning line.

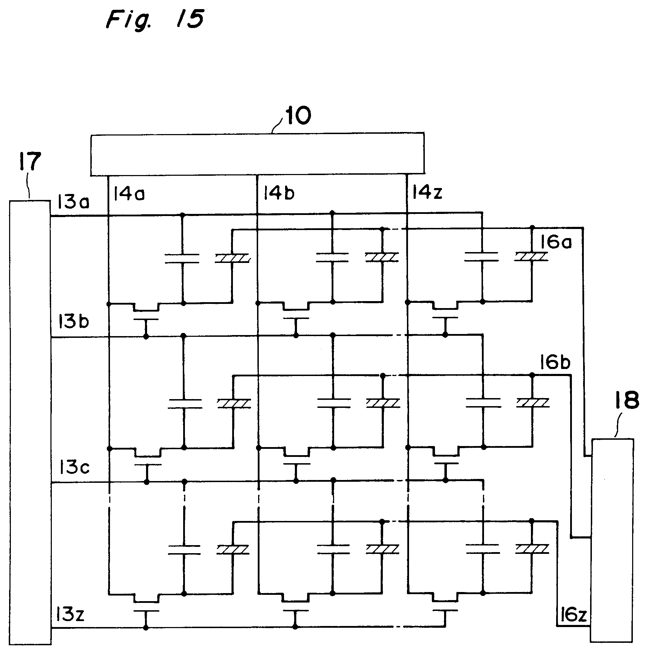

Fig. 15 shows a circuit of the liquid crystal display according to the fourth embodiment of the present invention. The circuit includes a scanning signal and modulation signal driving circuit 17, the image signal driving circuit 10, a counter electrode driving circuit 18, the scanning signal lines 13a to 13z, the image signal lines 14a to 14z and the counter electrodes 16a to 16z of liquid crystal. In this embodiment, since the storage capacitor is separately formed on each scanning signal line as described above, the modulation signal is applied to each corresponding scanning signal line.

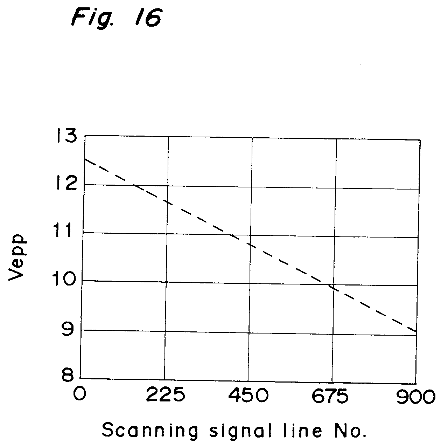

Fig. 16 shows an optimum Vepp for each scanning signal line. In Fig. 16, supposing that character A denotes a constant, Vepp(n) for the n-th scanning signal line and Vepp(n + 1) for the (n + 1)-th scanning signal line have the following relation.

$$|Vepp(n) - Vepp(n + 1)| = A$$

By performing drive in which optimum Vepp is added to each scanning signal line in this way, the liquid crystal display lessens dependence on viewing angle in the vertical direction of the liquid crystal panel. At this time, difference between Vepp at the upper portion of the display screen and that at the lower portion of the display screen is about 3.5 V.

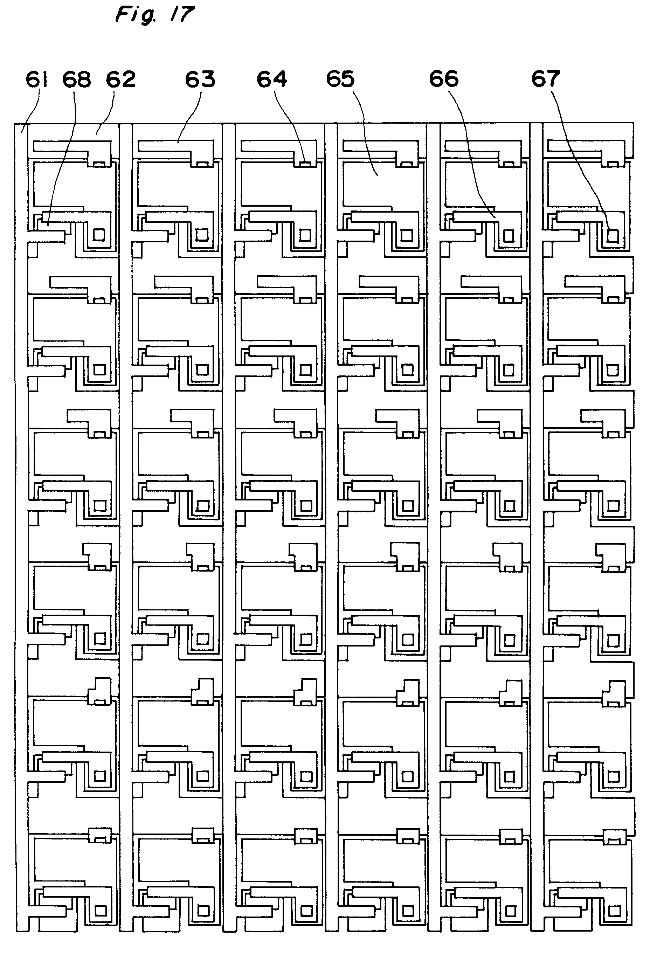

Finally, Fig. 17 shows layout of an array substrate employed in a liquid crystal panel of a liquid crystal display according to a fifth embodiment of the present invention. The array substrate includes a source electrode (image signal line) 61, a gate electrode (scanning signal line) 62, a storage capacitor 63, contact windows 64 and 67, a pixel electrode 65, a drain electrode 66 and a TFT 68. In this embodiment, area of the storage capacitor 63 is changed from the upper portion of the liquid crystal panel towards the lower portion of the liquid crystal panel such that the storage capacitor has a capacity five times a liquid crystal capacity and a capacity equal to the liquid crystal capacity at the upper portion and the lower portion of the liquid crystal panel, respectively. Fig. 17 explains capacity of the storage capacitor 63 gradually changes in the array substrate from the upper portion of the liquid crystal panel towards the lower portion of the liquid crystal panel. The number of pixels of the array substrate employed in this embodiment is different from that of Fig. 17.

A concrete production method of the liquid crystal panel is described, hereinbelow. Polyimide solution " LX-5400" (brand name of Hitachi Chemical Co., Ltd.) is coated by spinning method on an array substrate and a color filter substrate having an effective display area of 250 mm x 320 mm so as to have a dried thickness of 600 Å as alignment layers. In the array substrate, 1036800 trio-pixels are provided on a glass substrate and each dot has a TFT element. Meanwhile, the color filter substrate has red, green and blue pixels for the pixels, respectively. At this time, the polyimide solution is cured at 170 °C.

Subsequently, the alignment layers are subjected to rubbing at a twist angle of 90° such that a principal viewing angle direction is oriented towards the upper portion of the liquid crystal panel. Thereafter, these substrates are bonded to each other through glass fibers of 4.0 $\mu$m in diameter. Then, liquid crystal "ZLI-1565" (brand name of E. Merck) is filled, as a liquid crystal layer, in between the substrates. Thus, the liquid crystal panel is obtained.

When contrast is measured by viewing the upper and lower portions of the liquid crystal panel at a distance of 300 mm on a normal passing through the center of the liquid crystal panel while the modulation signal amplitude Vepp is kept constant, the upper portion of the liquid crystal panel has a contrast of 37 and the lower portion of the liquid crystal panel has a contrast of 62.

As will be seen from the foregoing, since capacity of the storage capacitor is reduced from the upper portion of the liquid crystal panel towards the lower portion of the liquid crystal panel, differences of contrast and transmittance characteristics due to change of angle for viewing the liquid crystal panel can be improved remarkably.

This is clear also from the equation (C). By changing the capacity Cs of the storage capacity gradually from the upper portion of the liquid crystal panel towards the lower portion of the liquid crystal panel even when the modulation signal amplitude is constant, satisfactory effects of improvement of viewing angle can be achieved.

## Claims

1. An active-matrix liquid crystal display including a liquid crystal panel (27) in which temperature changes gradually from an upper portion of the liquid crystal panel (27) towards a lower portion of the liquid crystal panel (27).

2. An active-matrix liquid crystal display including a liquid crystal panel (50) having a liquid crystal layer (40) in which tilt angle of liquid crystal molecules (35) changes gradually from an upper portion of the liquid crystal panel (50) towards a lower portion of the liquid crystal panel (50).

3. An active-matrix liquid crystal display comprising:
   a plurality of first lines (15a-15z);
   a plurality of pixel electrodes (7) which are connected to the first lines (15a-15z) through capacitors so as to be disposed in a pattern of a matrix;
   an image signal line (14a-14z);
   a scanning signal line (13a-13z);
   a switching element (3) which is electrically connected to the image signal line (14a-14z) and the scanning signal line (13a-13z) and is connected to each of the pixel electrodes (7);
   a counter electrode (Vt); and
   liquid crystal (7) which is held between each of the pixel electrodes (7) and the counter electrode (Vt) and is subjected to AC drive;
   wherein when during an ON period of the switching element (3), an image signal voltage obtained by inverting polarity of a signal voltage is supplied to the pixel electrodes (7) per field of a display screen and during an OFF period of the switching element (3), a first modulation signal having a polarity opposite to that of the image signal voltage is supplied to the first lines (15a-15z) per field of the display screen, potential of the pixel electrodes (7) is changed such that a voltage obtained by adding a change of the potential of the pixel electrodes (7) and the image signal voltage to each other is applied to the liquid crystal (7);
   wherein the first modulation signals supplied to the first lines (15a-15z), respectively are different from one another.

4. An active-matrix liquid crystal display comprising:
   a plurality of first lines (15a-15z);
   a plurality of pixel electrodes (7) which are connected to the first lines (15a-15z) through capacitors so as to be disposed in a pattern of a matrix;
   an image signal line (14a-14z);
   a scanning signal line (13a-13z);
   a switching element (3) which is electrically connected to the image signal line (14a-14z) and the scanning signal line (13a-13z) and is connected to each of the pixel electrodes (7);
   a counter electrode (Vt); and
   liquid crystal (7) which is held between each of the pixel electrodes (7) and the counter electrode (Vt) and is subjected to AC drive;
   wherein when during an ON period of the switching element (3), an image signal voltage obtained by inverting polarity of a signal voltage is supplied to the pixel electrodes (7) per field of a display screen and during an OFF period of the switching element (3), a first modulation signal having a polarity opposite to that of the image signal voltage is supplied to the first lines (15a-15z) per field of the display screen, potential of the pixel electrodes (7) is changed such that a voltage obtained by eliminating a change of the potential of the pixel electrodes (7) and the image signal voltage to each other is applied to the liquid crystal (7);

wherein the first modulation signals supplied to the first lines (15a-15z), respectively are different from one another.

5. An active-matrix liquid crystal display as claimed in Claim 3, wherein the image signal voltage is obtained by inverting the polarity of the signal voltage per scanning line of the display screen and the polarity of the first modulation signal is inverted per scanning line.

6. An active-matrix liquid crystal display as claimed in Claim 4, wherein the image signal voltage is obtained by inverting the polarity of the signal voltage per scanning line of the display screen and the polarity of the first modulation signal is inverted per scanning line.

7. An active-matrix liquid crystal display as claimed in Claim 5, wherein the first modulation signals (Ve-(+), Ve(-)) of the opposite polarities have different absolute values.

8. An active-matrix liquid crystal display as claimed in Claim 6, wherein the first modulation signals (Ve-(+), Ve(-)) of the opposite polarities have different absolute values.

9. An active-matrix liquid crystal display as claimed in Claim 7, wherein prior to lapse of the ON period of the switching element (3), a portion of a potential of the first modulation signal is changed.

10. An active-matrix liquid crystal display as claimed in Claim 8, wherein prior to lapse of the ON period of the switching element (3), a portion of a potential of the first modulation signal is changed.

11. An active-matrix liquid crystal display as claimed in Claim 7, wherein the switching element is a thin film transistor (3),
   wherein supposing that Ve(+) and Ve(-) denote the first modulation signals of the opposite polarities, respectively, Vg denotes a potential change of a scanning signal, Cs denotes a storage capacity, Cgd denotes a capacity between a gate and a drain, Csd denotes a capacity between a source and a drain and ΣC denotes an overall electrostatic capacity per pixel, potential changes Cs•Ve(+)/ΣC and Cs•Ve(-)/ΣC of the pixel electrodes (7) by the first modulation signals and potential change Cgd•Vg/ΣC of the pixel electrodes (7) due to the potential change of the scanning signal have the following relation:

$$Cs•Ve(+)/\Sigma C + Cgd•Vg/\Sigma C = Cs•Ve(-)/\Sigma C - Cgd•Vg/\Sigma C = \Delta V^*$$

   where ΔV* has a value not less than a threshold voltage of the liquid crystal (7).

12. An active-matrix liquid crystal display as claimed in Claim 8, wherein the switching element is a thin film transistor (3),
   wherein supposing that Ve(+) and Ve(-) denote the first modulation signals of the opposite polarities, respectively, Vg denotes a potential change of a scanning signal, Cs denotes a storage capacity, Cgd denotes a capacity between a gate and a drain, Csd denotes a capacity between a source and a drain and ΣC denotes an overall electrostatic capacity per pixel, potential changes Cs•Ve(+)/ΣC and Cs•Ve(-)/ΣC of the pixel electrodes (7) by the first modulation signals and potential change Cgd•Vg/ΣC of the pixel electrodes (7) due to the potential change of the scanning signal have the following relation:

$$Cs•Ve(+)/\Sigma C + Cgd•Vg/\Sigma C = Cs•Ve(-)/\Sigma C - Cgd•Vg/\Sigma C = \Delta V^*$$

   where ΔV* has a value not less than a threshold voltage of the liquid crystal (7).

13. An active-matrix liquid crystal display as claimed in Claim 7, wherein the scanning signal line (13a-13z) acts also as each of the first lines (15a-15z) and the first modulation signal in addition to a scanning signal is applied to the scanning signal line (13a-13z).

14. An active-matrix liquid crystal display as claimed in Claim 8, wherein the scanning signal line (13a-13z) acts also as each of the first lines (15a-15z) and the first modulation signal in addition to a scanning signal is applied to the scanning signal line (13a-13z).

**15.** An active-matrix liquid crystal display as claimed in Claim 13, wherein the first modulation signal Ve( + ) of one polarity is supplied to the scanning signal line (13 a-13z) during the OFF period of the switching element (3) in an odd field and the first modulation signal Ve(-) of the other polarity is supplied to the scanning signal line (13a-13z) during the OFF period of the switching element (3) in an even field so as to change the potential of the pixel electrodes (7),

wherein supposing that a modulation signal amplitude Vepp is defined as Vepp = |Ve( + ) - Ve(-)|, a modulation signal amplitude Vepp(n) for an n-th scanning signal line (13a-13z) and a modulation signal amplitude Vepp(n + 1) for an (n + 1)-th scanning signal line (13a-13z) have the following relation:

Vepp(n) ≦ Vepp(n + 1)

where character n denotes an arbitrary natural number.

**16.** An active-matrix liquid crystal display as claimed in Claim 13, wherein the first modulation signal Ve( + ) of one polarity is supplied to the scanning signal line (13 a-13z) during the OFF period of the switching element (3) in an odd field and the first modulation signal Ve(-) of the other polarity is supplied to the scanning signal line (13a-13z) during the OFF period of the switching element (3) in an even field so as to change the potential of the pixel electrodes (7),

wherein supposing that a modulation signal amplitude Vepp is defined as Vepp = |Ve( + ) - Ve(-)|, a modulation signal amplitude Vepp(n) for an n-th scanning signal line (13a-13z) and a modulation signal amplitude Vepp(n + 1) for an (n + 1)-th scanning signal line (13a-13z) have the following relation:

Vepp(n) ≧ Vepp(n + 1)

where character n denotes an arbitrary natural number.

**17.** An active-matrix liquid crystal display as claimed in Claim 15, wherein the modulation signal amplitude Vepp(n) for the n-th scanning signal line (13a-13z) and the modulation signal amplitude Vepp(n + 1) for the (n + 1)-th scanning signal line (13a-13z) have the following relation:

|Vepp(n) - Vepp(n + 1)| = A

where character A denotes a constant.

**18.** An active-matrix liquid crystal display as claimed in Claim 16, wherein the modulation signal amplitude Vepp(n) for the n-th scanning signal line (13a-13z) and the modulation signal amplitude Vepp(n + 1) for the (n + 1)-th scanning signal line (13a-13z) have the following relation:

|Vepp(n) - Vepp(n + 1)| = A

where character A denotes a constant.

**19.** An active-matrix liquid crystal display comprising:

a plurality of first lines;

a plurality of pixel electrodes (65) which are connected to the first lines through capacitors so as to be disposed in a pattern of a matrix;

an image signal line (61);

a scanning signal line (62);

a switching element (68) which is electrically connected to the image signal line (61) and the scanning signal line (62) and is connected to each of the pixel electrodes (65);

a counter electrode; and

liquid crystal which is held between each of the pixel electrodes (65) and the counter electrode and is subjected to AC drive;

wherein when during an ON period of the switching element (68), an image signal voltage obtained by inverting polarity of a signal voltage is supplied to the pixel electrodes (65) per field of a display screen and during an OFF period of the switching element (68), a first modulation signal having a polarity opposite to that of the image signal voltage is supplied to the first lines per field of the display screen, potential of the pixel electrodes (65) is changed such that a voltage obtained by adding a change of the potential of the pixel electrodes (65) and the image signal voltage to each other is applied to the liquid crystal;

wherein magnitude of storage capacity (63) changes gradually from an upper portion of a liquid crystal panel towards a lower portion of the liquid crystal panel.

20. An active-matrix liquid crystal display comprising:

a plurality of first lines;

a plurality of pixel electrodes (65) which are connected to the first lines through capacitors so as to be disposed in a pattern of a matrix;

an image signal line (61);

a scanning signal line (62);

a switching element (68) which is electrically connected to the image signal line (61) and the scanning signal line (62) and is connected to each of the pixel electrodes (65);

a counter electrode; and

liquid crystal which is held between each of the pixel electrodes (65) and the counter electrode and is subjected to AC drive;

wherein when during an ON period of the switching element (68), an image signal voltage obtained by inverting polarity of a signal voltage is supplied to the pixel electrodes (65) per field of a display screen and during an OFF period of the switching element (68), a first modulation signal having a polarity opposite to that of the image signal voltage is supplied to the first lines per field of the display screen, potential of the pixel electrodes (65) is changed such that a voltage obtained by eliminating change of the potential of the pixel electrodes (65) and the image signal voltage to each other is applied to the liquid crystal;

wherein magnitude of storage capacity (63) changes gradually from an upper portion of a liquid crystal panel towards a lower portion of the liquid crystal panel.

## Fig. 1

$$0° \leqq \phi \leqq 90° \quad 270° \leqq \phi \leqq 360° : \theta \geqq 0$$

$$90° \leqq \phi \leqq 270° : \theta \leqq 0$$

Fig. 2a

Fig. 2b

Fig. 3

*Fig. 4*

Fig. 5

Fig. 6

EP 0 588 019 A2

Fig. 7a — Vg

Fig. 7b — Ve

Fig. 7c — Vt

Fig. 7d

Fig. 7e — Va

Fig. 7f — Va'

Odd field      Even field

## *Fig. 8*

*Fig. 9*

Signal voltage

Normal — 16° — 8° — 8° — 16°
(Downward)(Downward)(Upward) (Upward)

Fig. 10

Transmittance

Signal voltage

Normal — 16° — 8° — 8° — 16°
(Downward)(Downward)(Upward)  (Upward)

24

Fig. 11

# Fig. 12

$Vg$

$Vg$ (n)

$Ve$ (n)

$Ve(+)(n)$

$Ve(-)(n)$

$Vt$ (n)

$Vg$

$Vg$ (n + 1)

$Ve$ (n + 1)

$Ve(+)(n + 1)$

$Ve(-)(n + 1)$

$Vt$ (n + 1)

Fig. 13

27

*Fig. 14a*

Vg

Vg

Ve (−)

Ve (+)

*Fig. 14b*

Vsig

Vt

Fig. 15

Fig. 16

Fig. 17